(19) Europäisches Patentamt

European Patent Office

Office européen des brevets

(11) **EP 4 503 072 A1**

(12) **EUROPEAN PATENT APPLICATION**

(43) Date of publication:
05.02.2025 Bulletin 2025/06

(21) Application number: 23189245.6

(22) Date of filing: 02.08.2023

(51) International Patent Classification (IPC):
*H01F 27/34* (2006.01)　　　*H02M 3/00* (2006.01)
*H02M 3/335* (2006.01)　　　*H01F 27/28* (2006.01)

(52) Cooperative Patent Classification (CPC):
**H01F 27/34; H02M 1/0048; H02M 1/123;
H02M 3/01; H02M 3/33569; H02M 3/33576;**
H01F 2027/2809; H01F 2027/2819

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Delta Electronics (Thailand) Public
Co., Ltd.
Samutprakarn 10280 (TH)**

(72) Inventor: **KRUMPHOLZ, Christian
79346 Endingen (DE)**

(74) Representative: **Hoefer & Partner Patentanwälte
mbB
Pilgersheimer Straße 20
81543 München (DE)**

(54) **PLANAR TRANSFORMERS AND LLC CONVERTERS**

(57) The invention concerns a planar transformer (1), especially for a DC/DC converter, comprising: a magnetic core component (2) comprising at least one plate portion (3) and a plurality of legs (4) extending from the plate portion (3); a secondary transformer side (50) with at least one secondary winding (5); and a primary transformer side (60) with a plurality of primary windings (6); wherein: the at least one secondary winding (5) and the plurality of primary windings (6) are stacked in layers (7) along a stacking direction (8) parallel to an extension direction (9) of the legs (4), the plurality of primary windings (6) of different layers (7) are connected to one another, and wherein a total surface area of primary windings (6) differs between at least two layers (7) of primary windings (6). The invention further concerns LLC converters (100, 200).

## Fig. 1a

EP 4 503 072 A1

**Description**

The invention concerns planar transformers, especially for a DC/DC converter, and LLC converters.

Planar transformers, DC/DC converters employing same, and LLC converters especially comprising such planar transformers are commonly known. Conventionally, especially due to their compact size, planar transformers have a problem of electromagnetic interference between their primary side and their secondary side during use of the device. In particular, planar transformers disadvantageously generate common mode currents, which are caused by a comparably high coupling capacity due to the compact size and commonly employed tight stacking of windings thereof. For instance, the common mode coupling capacity can be five to ten times larger than in a comparable (with regard to usecase and/or electrical characteristics) conventional wound transformer. Common solutions to these problems employ shield windings between primary and secondary windings so as to reduce or compensate/balance common mode currents and their resulting noise and losses.

For example, EP 3 696 831 A1 discloses a planar transformer with primary and secondary windings in winding layers and with charge balance windings as shield windings disposed between, with regard to their stacking direction, primary and secondary windings of the planar transformer for reduction or balancing of common mode currents. These charge balance windings are in addition to the primary and secondary windings of the planar transformer.

CN211719418U also discloses a planar transformer with multiple additional shield windings disposed between primary and secondary windings along a stacking direction thereof.

However, these known solutions using shield windings pose a plurality of additional challenges. For one, adding shield winding layers greatly increases the distance between primary and secondary windings, especially since these need to be electrically insulated from one another, thereby reducing efficiency of inductive coupling of the planar transformer and thereby also increasing the size thereof. Further, the current induced in the shield windings is loss, as it does not participate in the core functioning of the transformer, i.e. the transformation of voltage between primary and secondary side.

One of the objects of the present invention is to provide a planar transformer which is capable of compensating common mode currents while simultaneously being efficient and compact. Another object is to provide an LLC converter with these advantages.

Solutions to these objects are achieved by the subject matter of the independent claims. The dependent claims contain advantageous embodiments of the present invention.

In particular, one solution of these objects is achieved by the subject matter of claim 1, which concerns a planar transformer, especially for a DC/DC converter. The planar transformer comprises a magnetic core component. The magnetic core component comprises at least one plate portion and a plurality of legs extending from the plate portion. The planar transformer further comprises a secondary transformer side with at least one secondary winding and a primary transformer side with a plurality of primary windings. Therein, the at least one secondary winding and the plurality of primary windings are stacked in layers along a stacking direction parallel to an extension of the legs of the magnetic core component. The plurality of primary windings of different layers are connected to one another. Therein, a total surface area of primary windings differs between at least two layers of primary windings. For instance, the total surface area of primary windings of one layer is different from the total surface area of primary windings of another (one or more other) layer(s) of primary windings.

By employing total surface areas of primary windings which are different between at least two layers of primary windings, an electric coupling capacity between the primary side and secondary side differs with respect to different layers of primary windings such that a common mode current caused by the coupling capacity is also compensated. Additionally, due to the compensation of common mode current, a middle point of the primary windings is held at a substantially stabile or quasi-stabile potential. In this regard, the term "quasi-stable" refers to stability of the potential at or near the switching frequencies. Furthermore, shield layers are avoided thereby, thus saving space and reducing losses, i.e. increasing efficiency.

For ease of understanding, in the foregoing and the following, the term "winding of a layer" refers to all portions or sections of coils of that layer. This includes portions or sections wound around different legs within that layer. In other words, portions or sections wound around one leg and further portions or sections wound around another leg within that layer are taken together as "winding of a layer". The term "winding layer", i.e. a layer of windings of the planar transformer, refers to all portions (coil portions) thereof located in a same single plane, including portions wound at least partially around different legs. The winding layers are stacked (in layers) parallel to an extension direction (also referred to as a central axis) of the legs, and each layer (the extension plane of each layer) is in particular perpendicular to the extension direction of the legs.

Further, it should be noted that the terms "primary", "secondary", "primary side", "secondary side" and respective windings are coined preferably only with respect to the transformer, merely to differentiate the two sides. It is however known that input and output of the transformer may be switched, such that essentially the "secondary side" would correspond to "input" and the "primary side" would correspond to "output".

In addition, the term "number of turns" will be used. Herein, the term "a turn" refers to at least a portion of a (primary winding) having a curvature with a radius to a radial center within the leg being referred to. In other words, when referring to a winding or a winding portion having a turn around a leg, that winding or winding portion has curvature with a radial center being, in cross-section perpendicular to the leg extension direction, within that leg, especially at the center of that leg. In other words, a turn around a leg refers to a winding or portion thereof being curved around, and preferably corresponding in shape of, that leg. Along a substantial extension of a winding or winding portion, said winding may comprise an inflection point of curvature, which characterizes said winding essentially switching (following along its extension) from being wound around one leg to then another leg. In other words, the inflection point differentiates between winding turn around one leg and winding turn of another leg.

Furthermore, a number of turns of a layer is preferably defined as the total number of turns of a winding around all legs in this layer. In particular, a full turn is defined as a winding completely surrounding, i.e. 360° surrounding, a leg. A full turn may be formed by primary windings of multiple layers taken together. For instance, one or more layers may individually or taken together comprise more than one full turn, but less than two full turns (or between two and three full turns, etc.). For instance, four quarter turns may contribute to one full turn, or a leg may be surrounded by five quarter turns, which defines one full turn and additionally one quarter turn. With respect to the winding of a particular leg, in some embodiments, one or more full turns is divided among multiple winding layers, i.e. one layer for instance comprises a half turn around a first leg, and one other layer for instance comprises another corresponding, i.e. the other, half turn around the same first leg, but in a different plane/layer.

In some embodiments, the number of turns per layer of primary windings differs between at least two layers of primary windings. Thereby, the different total surface areas are achieved by the number of turns differing between said layers. In an alternative embodiment, however, the differing surface areas may for example be achieved by differing widths of the windings between layers.

In particular, in some embodiments, the number of full turns per layer of primary windings differs between at least two layers of primary windings.

Advantageously, the total number of turns of a layer of at least two layers of primary windings is respectively a non-integer rational number. In other words, the total number of turns of a layer may be a rational number (for example, 10/4) which does not result in an integer, wherein an example of an integer rational number would be 10/5, which is a rational number resulting in an integer, namely 2.

In the foregoing, in some specific examples, the total number of turns of a layer of multiple layers added together is an integer. For example, in an exemplary case with four legs, one layer may comprise with respect to the legs three half-turns and one quarter-turn of primary windings, and another layer may comprise three further half-turns of primary windings and one three-quarter-turn of primary windings, thereby each layer having a non-integer rational number (7/4 and 9/4), in sum being an integer, namely four (16/4).

In some embodiments, at least one layer of primary windings comprises at least one primary winding portion with one or more of the following configurations.

Therein, at least one primary winding portion is preferably connected to further primary winding portions of the same layer only indirectly. In particular, the at least one primary winding portion of one layer is connected to primary winding portions of the same layer only via at least one primary winding portion of another layer. In some embodiments, such primary winding portions can respectively (and with respect to one layer) be wound, partially or fully, around one or a plurality of legs.

In addition or alternatively thereto, at least one primary winding portion couples only electrically between the primary side and the secondary side. These especially produce a capacity (coupling capacity), particularly without coupling magnetically. In other words, such primary winding portions produce or alter the coupling capacity, without interacting with other windings so as to couple magnetically, i.e. transform voltage/current between primary and secondary sides.

Preferably, these only electrically coupling primary winding portions comprise a total number of turns over multiple layers added together which is a non-integer rational number.

Herein, the term "couples only electrically" refers to coupling as a capacity. Structurally speaking, if for example all primary winding portions wound around one leg over multiple layers added together result in two and one-quarter full turns, then the winding portions constituting the two full turns will couple magnetically and the winding portion(s) constituting the remaining one-quarter full turn will couple only electrically, especially without affecting the magnetic coupling. The only electrically coupling primary winding portions can therefore capacitively couple with the secondary side, while keeping the magnetic coupling characteristics between the primary side and the secondary side substantially constant (with regard to not including these portions). For instance, only electrically coupling primary winding portions may be added to certain layers in addition to the magnetic coupling primary winding portions. Furthermore, by arranging the primary winding portions which only couple electrically in certain layers, the use of shield layers can be avoided. Thus, total thickness of the transformer along the stacking direction can be reduced, or common mode currents can be compensated for without increasing thickness of the transformer.

Further, in some embodiments, at least one of the primary winding portions is less than a full turn. For instance, one primary winding portion of one layer may be a half-turn around one leg, this primary winding portion not being connected directly to other primary winding portion(s) of that same layer, but may be for instance connected to another primary winding portion of a different layer also constituting a half-turn (the respective other half) around the same leg.

In some embodiments, the at least one primary winding portion which couples only electrically does not carry a current relevant for the magnetic coupling when the primary transformer side is connected to a voltage. In other words, when a non-zero voltage is connected to the primary transformer side, preferably no current flows through said only electrically coupling at least one primary winding portion. Therein, the voltage preferably generates an electric field in said winding portion, without however inducing thereby a current therein. Said electric field couples with the secondary side so as to produce a capacity therebetween. In particular, in said case of applied voltage, a current is caused to flow through other primary windings, more specifically through other primary winding portions which are not configured to only electrically but also magnetically couple. Said current induces the magnetic field used for the operation of the transformer.

Preferably, a total number of turns of primary windings of all layers around a first leg is different from a total number of turns of primary windings of all layers around a second leg, especially of the same magnetic core component. For instance, over all layers, the number of turns of primary windings (and their respective primary winding portions) may be for one leg one full turn, whereas for another leg may be two full turns, or a non-integer rational number. This has the additional advantage in that the induced magnetic field can be distributed among the legs. For instance, this allows for distributing the magnetic field to legs which can be more efficiently cooled, such that for example legs which are located closer to an outside, i.e. closer to for example a heat sink, can comprise a higher number of turns than for example legs located closer to an inside, i.e. farther from said heat sink. Furthermore, this flexibility in distribution of windings/winding portions allows for adaptation of the primary windings for predetermined turn ratios when considering secondary side windings.

In some embodiments, in at least one layer, at least one leg comprises no primary winding wound around it. For instance, in a case of four layers, one leg may have a full turn in a first layer, a full turn in another layer, but no other primary windings or primary winding portions wound around it in the other two layers.

In particular, in at least one layer, at least one leg comprises no full turn of primary winding wound around it. For instance, as elucidated above and as will be shown in specific exemplary embodiments, one leg may comprise in one layer only a primary winding portion not constituting a full turn around it, for example only half of a turn. In other words, at least one leg may comprise in at least one layer only a partial turn of primary winding wound around it.

In preferable embodiments, the at least one leg comprising no full turn of primary winding wound around it is a return leg for closing a magnetic circuit with winding legs, which are at least one other leg of the same magnetic core which comprises at least one full turn of primary winding wound around, i.e. is coupled magnetically. Furthermore, the aforementioned return leg may comprise, in at least one layer, one or more primary winding portions which couple only electrically.

With such exemplary arrangements of primary windings and their primary winding portions, it is especially possible to disperse, for a predetermined fixed number of full turns, the primary windings among a plurality of layers. In addition, in for example layers comprising only less than full turns for one or more legs, additional primary winding portions only coupling electrically may be added. Thereby, the coupling capacity of some layers is different from the capacity of other layers while simultaneously saving space and increasing efficiency of the transformer.

In some embodiments, the primary windings are elongated meander-shaped. In addition or alternatively thereto, the secondary windings are preferably plate-shaped. In particular, the "meander-shaped" term refers to a view onto the respective layer, i.e. a top view along the extension direction of the legs, wherein the primary windings meander, i.e. following a winding course, curve or bend, along their substantial elongation within that layer. In particular, their cross-section perpendicular to their substantial elongation is preferably rectangular, with their height in cross-section being much smaller than their widths or lengths, due to being planar.

Preferably, the planar transformer comprises two layers of secondary windings connected with one another and sandwiching at least two layers of primary windings connected with one another. Therein, preferably, the layers are arranged as: secondary, primary, primary, ..., secondary, with "..." denoting further possible primary winding layers. In some examples, the planar transformer comprises two layers of secondary windings sandwiching four layers of primary windings.

Preferably, the respectively connected windings are connected with one another through vias extending in stacking direction parallel to the extension direction of the legs between the layers.

In some embodiments, the total surface area of secondary windings is equal between all layers of secondary windings.

The present invention also concerns an LLC converter comprising the planar transformer according to any one of the embodiments. Preferably, the LLC converter further comprises a resistance element and a capacitance element, especially together as an RC circuit, connected directly to a middle point of the primary winding of the planar transformer. Preferably, the RC circuit may be an RLC circuit (further comprising an inductor L).

In the preferable embodiment comprising the RC circuit, said RC circuit is configured to dampen or attenuate resonances in the transformer, especially resonances of higher order. Due to the RC being connected directly to the middle point of the primary winding, which is held at a substantially stable or quasi-stable potential, the RC is not loaded via the transformer and thus also does not generate any losses of the input voltage. Furthermore, as described above, the compensation of common mode current supplies the stabile or quasi-stabile potential. In this regard, "quasi-stabile" refers to comparatively small, with regard to amplitude, higher order, with regard to frequency, resonances generated by the transformer at frequencies much higher than the switching frequencies. However, these small higher order resonances are dampened by the RC circuit at the primary side. The RC circuit thus effectively acts as a high pass filter.

Preferably, another end of the RC circuit, i.e. the one not connected to the middle point, is preferably connected to a stabile potential middle point between input capacitors of the LLC.

Preferably, the resistance element and the capacitance element of the RC circuit, further preferably also the inductance of the RLC circuit, are discrete elements.

The present invention further concerns an LLC converter. The LLC converter of this embodiment comprises a planar transformer, the planar transformer comprising a magnetic core component comprising at least one plate portion and a plurality of legs extending from the plate portion. Further, the planar transformer comprises a secondary transformer side with a plurality of secondary windings and a primary transformer side with a plurality of primary windings. Therein, the at least one secondary winding and the plurality of primary windings are stacked in layers along a stacking direction parallel to an extension direction of the legs, and the plurality of primary windings of different layers are connected to one another, especially through vias. Further, the primary transformer side is connected with an input of the LLC converter and comprises a center tap of the primary windings, and the secondary transformer side is connected with an output of the LLC converter and comprises a center tap of the secondary windings. Therein, the primary and/or secondary center tap(s) are directly connected to an RC circuit. Preferably, the primary and secondary center taps are connected to middle points of the primary windings and the secondary windings, respectively. Preferably herein, the total surface area of primary windings is equal between all layers of primary windings. Further preferably, the total surface area of secondary windings is equal between all layers of secondary windings.

Preferably, the RC circuit of this embodiment is an RLC circuit, as described above. Further preferably, the elements of either of these are discrete.

Preferably, the layers of primary windings are symmetrical, especially with regard to the center tap. In other words, all layers of primary windings for instance have the same number of turns around the same legs, or for instance, the layers of primary windings are symmetrically mirrored with respect to the center tap. In the latter case, for instance, the shape of the primary windings in one layer on one side of the center tap will be equal to the shape of the primary windings in another layer on the other side of the center tap, but not necessarily equal to the shape of the primary windings in another layer on the same side of the center tap.

Preferably, the primary windings are meander-shaped, as described above. In addition or alternatively thereto, the secondary windings are preferably plate-shaped.

Preferably, the magnetic core component of the foregoing embodiments is formed of a ferrite. Preferably, the plate portion and the legs of the magnetic core component are formed integrally with one another, in particular monolithic with one another.

Preferably, the primary windings and/or the secondary windings are formed of copper.

Preferably, the primary windings and/or the secondary windings are printed on a printed circuit board. Further preferably, each aforementioned layer is one printed circuit board.

Preferably, the magnetic core component in some embodiments is a so-called "matrix core", wherein such a core component comprises a substantially rectangular, particularly square, plate portion and four legs extending therefrom. Therein, preferably, the legs are arranged equidistant from each other, especially respectively at corners of the square core component when viewed in cross-section perpendicular to the leg extension direction.

Preferably, the magnetic core component comprises two plate portions which sandwich, along stacking direction, the primary winding layers and the secondary winding layers, with the legs extending from the plate portions through the winding layers. Therein, a gap may be provided between, along stacking direction, the legs connected to a first plate portion and the legs connected to a second plate portion. The gap may be an air gap or may be filled with material, for example resin or a portion of printed circuit board.

The foregoing described LLC converters are examples of a DC/DC converter for which or in which the planar transformer can be employed.

Further details, advantages, and features of the preferred embodiments of the present invention are described in detail with reference to the figures. Therein:

  Figs. 1a- 1f show schematic cross sectional views of layers of a planar transformer according to a first embodiment of the present invention;

  Figs. 2a - 2f show schematic cross sectional views of layers of a planar transformer according to a first embodiment of the present invention;

Fig. 3 shows a circuit diagram of a first embodiment of an LLC converter according to the present invention;

Fig. 4 shows another circuit diagram of the first embodiment of the LLC converter according to the present invention;

Figs. 5a - 5d show schematic cross sectional views of layers of a planar transformer according to a third embodiment of the present invention;

Figs. 6a - 6f show schematic cross sectional views of layers of a planar transformer according to a fourth embodiment of the present invention;

Fig. 7 shows a circuit diagram of a second embodiment of an LLC converter according to the present invention; and

Figs. 8a - 8d show schematic configuration examples of a magnetic core component of the planar transformer according to the present invention.

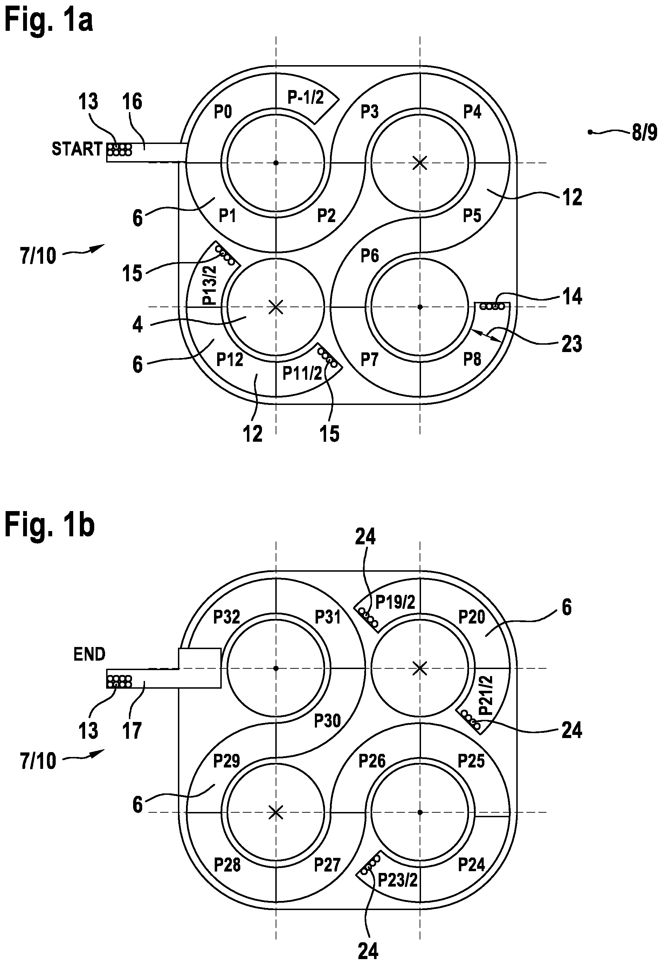

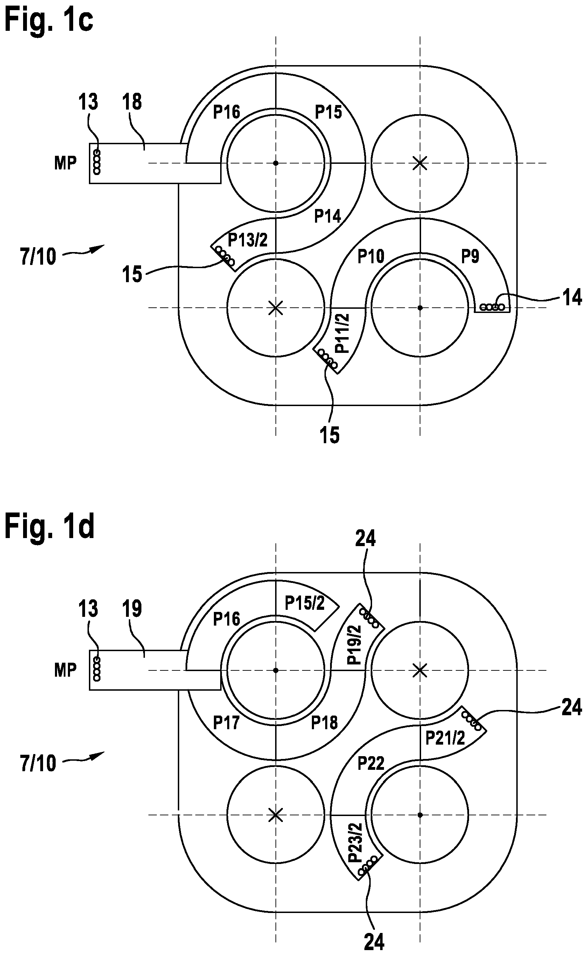

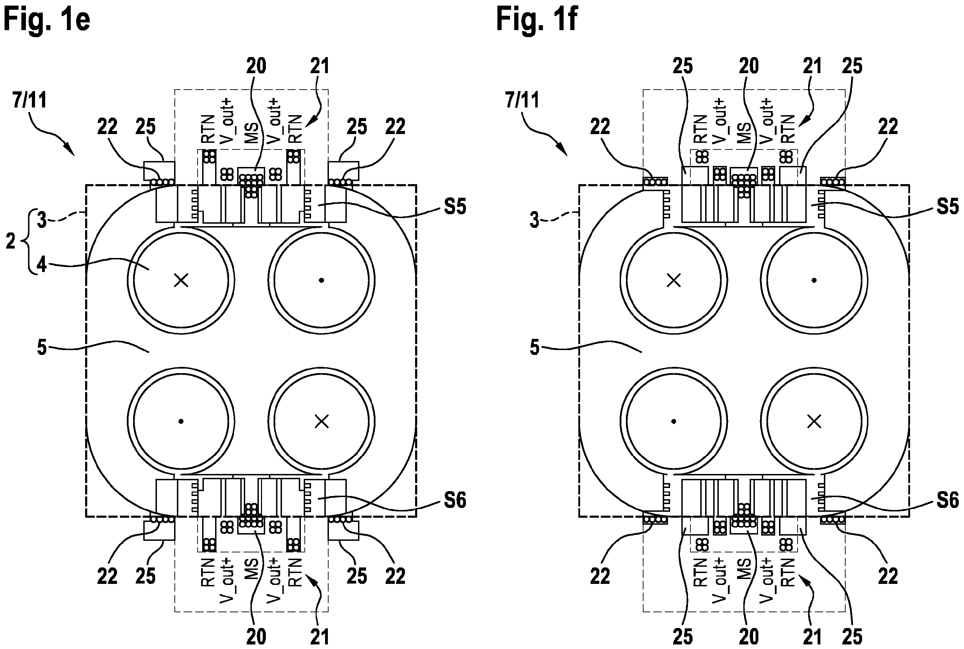

Figs. 1a- 1f show schematic cross sectional views of layers 7 of a planar transformer 1 according to a first embodiment of the present invention. In the following, the term "Fig. 1" refers to all Figs. 1a - 1f simultaneously.

First, an overview of what is shown in Figs. 1a - 1f will be given, before the planar transformer 1 is explained.

Each of Figs. 1a - 1f shows one layer 7 of the planar transformer 1 (henceforth: "the transformer 1"). The layers 7 are stacked on top of one another along a stacking direction 8 to form the planar transformer 1, but are shown spread out over Figs. 1a - 1f for higher understandability.

The layers 7 of Figs. 1a to 1d are respectively layers 7 comprising primary windings 6 (henceforth: "primary winding layers 10" or "primary layers 10"). The layers 7 of Figs. 1e and 1f are respectively layers 7 comprising secondary windings 5 (henceforth: "secondary winding layers 11" or "secondary layers 11").

As can be taken from Fig. 1, the primary windings 6 are meander-shaped.

The secondary winding layers 11 sandwich the primary winding layers 10 along the stacking direction 8 such that their arrangement is, along the stacking direction 8: secondary winding layer 11 (Fig. 1e, henceforth: "first layer 1e"), primary winding layer 10 (Fig. 1a, henceforth "second layer 1a"), primary winding layer 10 (Fig. 1c, henceforth "third layer 1c"), primary winding layer 10 (Fig. 1b, henceforth "fourth layer 1b"), primary winding layer 10 (Fig. 1d, henceforth "fifth layer 1d"), secondary winding layer 11 (Fig. 1f, henceforth "sixth layer 1f").

Now, the transformer 1 will be explained.

The transformer 1 comprises at least one secondary winding 5 and a plurality of primary windings 6. Herein and in the following, the term "winding" refers to coils which form the primary or secondary side of the transformer 1, with their number of windings corresponding to their total number of turns.

The primary windings 6 are a part of a primary transformer side 60 (Figs. 1a - 1d), and the secondary windings 5 are a part of a secondary transformer side 50 (Figs. 1e and 1f).

For instance, the transformer 1 of the present embodiment comprises four primary windings 6 (four primary winding layers 10) and two secondary windings 5 (two secondary winding layers 11). The transformer 1 can preferably comprise only one secondary winding 5. The transformer 1 can preferably comprise at least two primary windings 6 and preferably no more than eight primary windings 6, respectively two to eight primary winding layers 10.

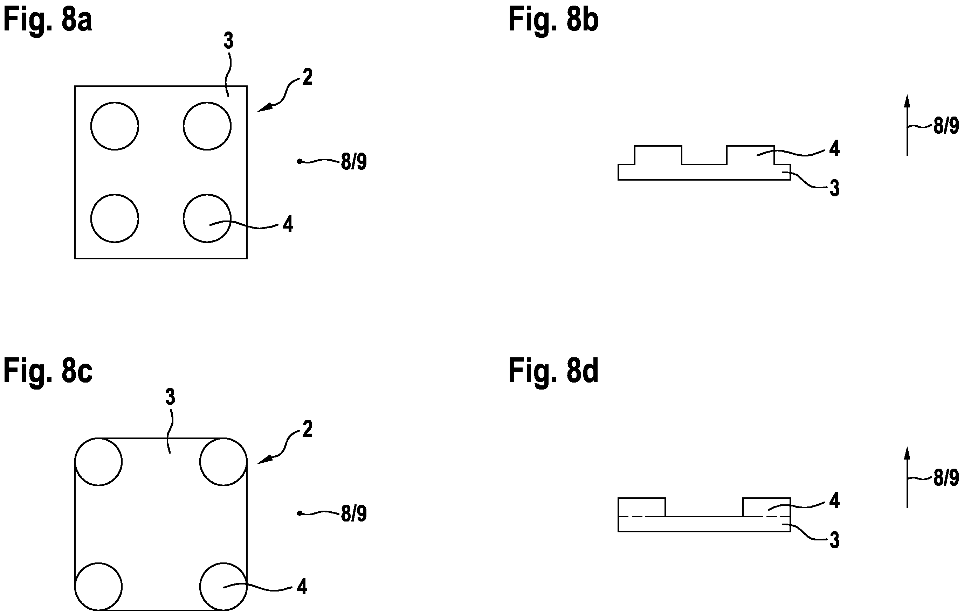

As can be seen in Fig. 1, especially Fig. 1e, the transformer 1 comprises a magnetic core component 2 (compare also Figs. 8a - 8d). The magnetic core component 2 comprises at least one plate portion 3 and a plurality of legs 4 extending from the plate portion 3. A leg extension direction 9 of the legs 4 is parallel to the aforementioned stacking direction 8. In the present example, the magnetic core component 2 comprises two plate portions 3, which sandwich the layers 7 in stacking direction. The plate portions 3 are indicated via dashed lines in Figs. 1e and 1f. Herein, the magnetic core component 2 comprises four legs 4. The legs 4 extend, along their extension direction 9, through all layers 7.

The aforementioned primary windings 6 generally (further explanation below) induce magnetic flux in the legs 4, which is denoted by the known symbols • and X for magnetic flux. As can be taken from Fig. 1, the magnetic flux of one leg 4 is in the same direction parallel to the stacking direction 8 over all layers 7 for that leg 4.

The plurality of primary windings 6 of different primary layers 10 are connected to one another. In other words, the primary winding 6 of one primary layer 10 is connected to the primary winding 6 of another primary layer 10. Herein, the primary windings 6 are interconnected throughout the primary layers 10 through vias 13, 14, 15, and 24. The connection scheme will be explained further below. First, the structure of the primary windings 6 will be further explained.

In the transformer 1, a total surface area of primary windings 6 differs between at least two layers 7 of primary windings 6. As is apparent from Figs. 1a - 1d, the primary windings 6 in the present example differ between all primary layers 10, and their surface area is correspondingly also different.

As is apparent from Fig. 1, widths 23 of the primary windings 6, their width 23 being defined perpendicular to their substantial elongation within one layer 10 and perpendicular to their thickness in stacking direction 8, are the same for all primary windings 6. Their thicknesses in stacking direction 8 are also the same. Therefore, their total surface area corresponds to their respective lengths along their substantial elongation within one layer 10. Thus, in other words, lengths of the primary windings 6 differ between different primary layers 10.

Thereby, a coupling capacity generated between the primary side 60 and the secondary side 50 is adapted so as to compensate common mode currents generated within the primary windings 6 and the secondary windings 5.

In the present embodiment, the number of turns per layer 10 of primary windings 6 differs between at least two layers 10 of primary windings 6 (primary layers 10). To calculate or determine the number of turns, Figs. 1a - 1d include dashed grids which divide the primary windings 6 into primary winding portions 12. The individual squares of the dashed grids divide the primary windings 6 into primary winding portions 12 of a quarter turn. Further, the primary winding portions 12 are denoted with references P#, "#" being a run-through number from a start point 16 to an end point 17. "P-1/2" of layer 1a extends from the start point 16 electrically away from the start point 16, i.e. not in direction towards the end point 17, such that it has a negative reference. References with an integer of "P1/2" or a multiple thereof (for example, "P15/2") indicate a primary winding portion 12 with half of a quarter turn, i.e. an eighth of a turn (half of one square of the dashed grids).

In the foregoing embodiment, the end point 17 is in the fourth layer 1b, and presently not in the fifth layer 1d. This is advantageous since the end point 17 of the primary windings 6 commonly has a high voltage and a strong effect on the coupling capacity with the secondary windings 5. Alternatively however, the end point 17 may be in the fifth layer 1d. In other words, the configurations of the fourth layer 1b and the fifth layer 1d may be appropriately switched such that the shown fifth layer 1d is exchanged for the fourth layer 1b and vice versa, i.e. their stacking order is switched.

A number of turns of a layer 7 is defined as the total number of turns of a winding 5, 6 (secondary or primary) around all legs 4 of this layer. The definition of a turn of a winding 5, 6 is as follows. A turn is defined with respect to one of the legs 4, wherein the winding 5, 6, is defined as comprising a turn (or partial turn) around a specific leg 4, if the winding 5, 6, or the respective winding portion 12, comprises a bend around that leg 4, i.e. has a curvature with a radius pointing to a center of that leg 4 in cross-section of the leg 4. For instance, in layer 1a, the winding portions 12 with reference P0 and P2 are quarter turns around a first leg 4 (enumeration starting clockwise from the top left) at the top left thereof, and the winding portions 12 with reference P3, P4 for instance are quarter turns around a second leg 4 (top right). A full turn is defined as the sum of partial turns adding up to one with regard to a specific leg 4. Therein, an inflection point along the extension of the primary windings 6 indicates a switch between winding portions 12 turned around one leg 4 and winding portions 12 turned around another leg 4.

For instance, in layer 1a, the primary winding 6 comprises primary winding portions 12: P-1/2, P0 - P8, and also P11/2, P12, P13/2. Added together, layer 1a comprises ten quarter turn primary winding portions 12 (P0 - P8, P12) and three eighth turn winding portions 12, such that the total number of turns of the second layer 1a is 23/8 (or 2.875).

On the other hand, layer 1d for instance comprises four quarter turn primary winding portions 12 (P16 - P18, P22) and four eighth turn primary winding portions 12 (P15/2, P19/2, P21/2, P23/2), and thus in total comprises one and one half turns (1 ½ or 1.5).

Therefore, the total number of turns of a layer 7, especially of the primary layers 10, of at least two layers is a non-integer rational number, as elucidated above with examples for layers 1a, 1d. This configuration greatly reduces overall common mode currents by compensating these between the primary windings 6.

More specifically, the primary winding portions 12 provide at least two capacities which connect (capacitively) the primary side 60 to the secondary side 50 using voltages of opposite polarity to cancel the resulting common mode currents. This will be explained further below with regard to a middle point 18 of the primary windings.

Now, the connection scheme of the windings 5, 6 will be explained.

As stated above, the primary windings 6 are interconnected through vias 13, 14, 15, and 24. In particular, the primary windings 6 are connected in series with one another through the vias 13, 14, 15, and 24.

The vias 13 extend through all primary layers 10 and connect primary connection strips 16, 17, 18, and 19 of the primary windings 6, and are thus referred to as "through vias 13".Herein, the through vias 13 of the second layer 1a and of the fourth layer 1b connect these respectively to the outside. Therein, the primary connection strip 16 of the second layer 1a is a primary start point connection strip 16 ("START"), to which input voltage is connected (for example, a high side of the input voltage). The primary connection strip 17 of the fourth layer 1b is a primary end point connection strip 17 ("END"), which is also connected to the input voltage (for example, a low side of the input voltage). Current flows from the primary start point connection strip 16 (henceforth "start point 16") to the primary end point connection strip 17 (henceforth "end point 17") via the primary windings 6 of all primary layers 10. These are connected to the outside input voltage using the through vias 13.

Further, the second layer 1a is connected to the third layer 1c using vias 14 and 15. The vias 14 and 15 interconnect two layers 10 (1a and 1c) and are thus referred to as "first interlayer vias 14" and "second interlayer vias 15".

Therefore, in view of the P# references for the primary winding sections 12, P8 is connected to P9 through the first interlayer vias 14. Within the third layer 1c, further following the meander-shaped elongation of the primary winding 6 through primary windings portions 12 P9 - P16, the primary layer 10 includes a middle point connection strip 18 (henceforth "middle point 18"), which allows for connection to the middle point of the primary windings 6. Further therebetween, the third layer 1c is interconnected with the second layer 1a through said second interlayer vias 15, which connect the primary winding portions 12 P11/2 and P13/2 of each of the second layer 1a and the third layer 1c with one another.

The middle point 18 of the third layer 1c is connected, using through vias 13, to a middle point connection strip 19 ("middle point 19") of the fifth layer 1d. Via their connection, the middle points 18, 19 form a common middle point of the series connection of all primary windings 6. Similar to the above with regard to the second layer 1a and the third layer 1c, primary winding portions 12 of the fifth layer 1d and the fourth layer 1b are interconnected through third interlayer vias 24, thus reaching the end point 17 in the fourth layer 1b. The middle point 18 and the middle point 19, being directly connected to one another, will in the following collectively be referred to as "the middle point 18, 19" (see also "MP" in the figures).

Herein, the aforementioned voltage polarity is defined as positive from the start point 16 to the middle point 18, 19 and as negative from the middle point 18, 19 to the end point 17. This definition, however, is arbitrary, so long as the polarities on either sides of the middle point 18, 19 are opposite to one another. In other words, negative may be defined from start point 16 to middle point 18, 19 and positive may be defined as from middle point 18, 19 to the end point 17.

As can be seen from Fig. 1 and the foregoing exemplary explanations, the transformer 1 comprises at least one primary winding portion 12 which is connected to further primary winding portions 12 of the same layer 7 only indirectly, namely via at least one primary winding portion 12 of another layer 7. For instance, the winding portions 12 denoted P11/2, P12, P13/2 are only indirectly connected to those denoted P-1/2 - P8 in that second layer 1a via the primary winding portions 12 of the third layer 1c, i.e. P9 - P11/2, P13/2 - P16.

In general, primary winding portions 12 through which current flows when a voltage is input, i.e. especially those that contribute to full turns of one or more individual legs 4 over one or more layers 7, induce the magnetic field in the legs 4, i.e. couple magnetically/inductively as well as electrically.

For example, considering the first leg 4 (top left), two full turns are formed, namely by the following primary winding portions 12: P1, P2, P15, P16 (first turn), P17, P18, P31, P32 (second turn). Further, since these are disposed, following their elongation and the current path, between the start point 16 and the end point 17, these primary winding portions 12 carry current and thus contribute magnetically.

Further, the following remaining primary winding portions 12 with regard to the first leg 4 only contribute electrically, not magnetically/inductively: P-1/2 and P0 of the second layer 1a and P16, P15/2 of the fifth layer 1d. These primary winding portions 12 produce a coupling capacity, but do not contribute magnetically/inductively since they do not carry current when the voltage is input. In other words, since these are not arranged, following their extension or the current path, between the start point 16 and the end point 17, they do not carry a current.

In general, primary windings portions 12 which carry no current and contribute/couple only electrically arranged closer to the start point 16 or the end point 17 contribute/couple more strongly and thus have a higher effect on the coupling capacity and thus the common mode currents.

In addition, the total number of turns of primary windings 6 of all layers 7 (of all primary layers 10) around a first leg 4 is different from a total number of turns of primary windings 6 of all layers 7 around a second leg 4. In other words, the respective legs 4 comprise a different number of total turns. In particular, the number of full turns, i.e. including only magnetically coupling primary winding portions 6, is different between at least two of the legs 4.

For example, as discussed above, the first leg 4 (top left) comprises in total thirteen quarter turns (twelve quarter turns and two eighth turns P-1/2, P15/2), particularly two full turns, whereas the second leg 4 (top right) comprises six quarter turns (P3, P4, P5, P19/2, P20, P21/2, P19/2, P21/2) and particularly no full turn. In this regard, it is noted that the second leg 4 (top right) is a return leg for closing a magnetic circuit. Thus, the respective primary winding portions 12 are used to compensate common mode current, without having a non-negligible effect on magnetic properties.

Further, the second leg 4 (top right) comprises in the third layer 1c and the fourth leg 4 (bottom left) comprises in the fifth layer 1d no primary windings 6 wound around them.

The secondary layers 11 include the secondary windings 5. Herein, the secondary windings 5 are plate-shaped and define, per leg 4, one full turn. The two secondary layers 11 are connected to one another in parallel through secondary layer interconnection vias 22. These secondary layer interconnection vias 22 also extend parallel to the stacking direction 8, similar to the through vias 13, through all layers 7 of the transformer 1. Furthermore, the secondary layers 11 are connected to the outside, i.e. an output, via secondary terminal connections 21. Therein, a secondary middle point connection strip 20 (henceforth "secondary middle point 20") is also connected to the secondary windings 5 (denoted in Figs. 1e, 1f with "MS", i.e. middle point secondary). The secondary layers 11 are further connected to heat sinks 25.

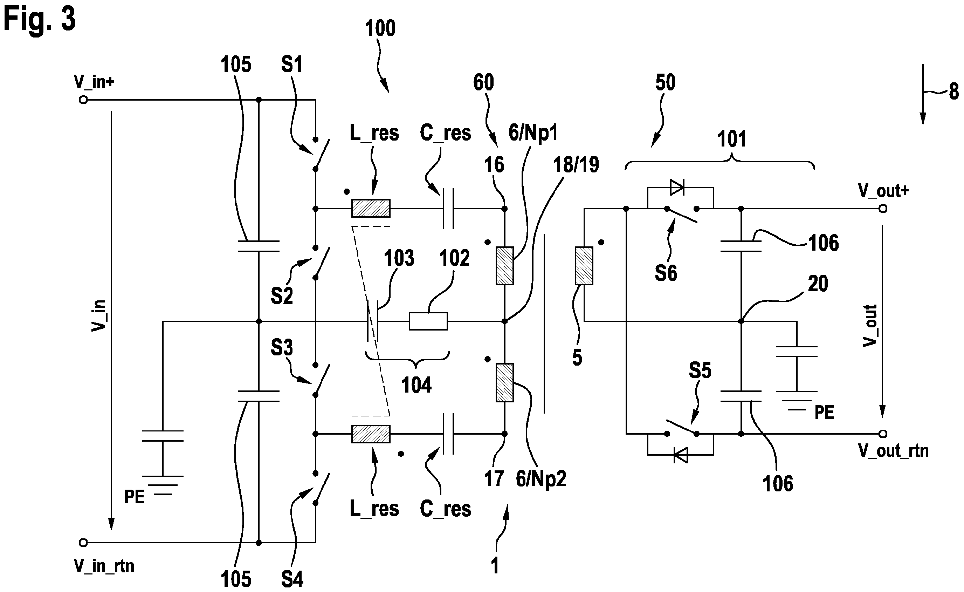

As a comparison of Figs. 1e and 1f with Fig. 3, which will be explained in more detail below, shows, the secondary terminal connections 21 connect the secondary layers 11 to RTN, which corresponds to V_out_rtn, i.e. an output voltage, in Fig. 3. Furthermore, switches S5 and S6 are located on the secondary layers 11, respectively with their source, drain and/or gate. Each of the individual switches S5, S6 shown in Fig. 3 may respectively comprise one or more switches, i.e. consist of a plurality of switches in parallel or in series.

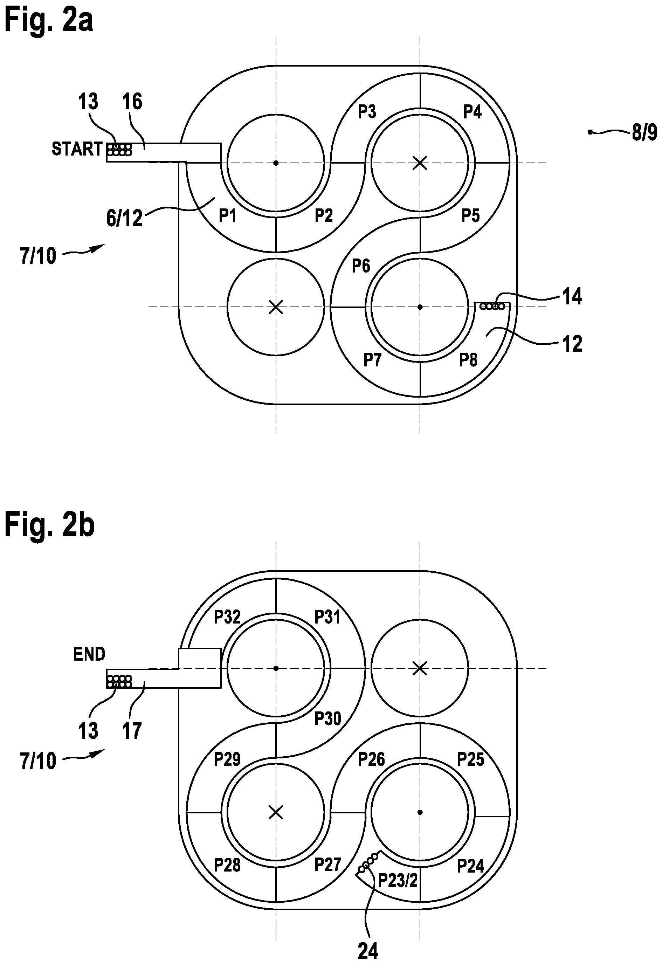

With respect to Figs. 2a - 2f, a second embodiment of the transformer 1 will be described. The foregoing with respect to embodiment one defined nomenclature, especially abbreviations, will also be used in the following.

In the second embodiment, a further example for arranging and connecting the primary windings 6 within and between the primary layers 10 is shown. The configuration of the secondary layers 11 is identical to that of the first embodiment.

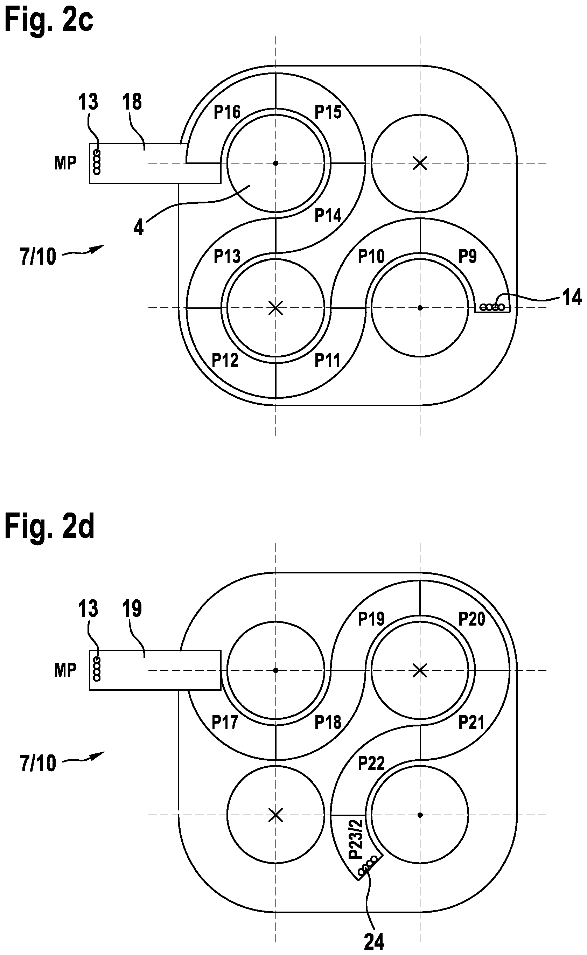

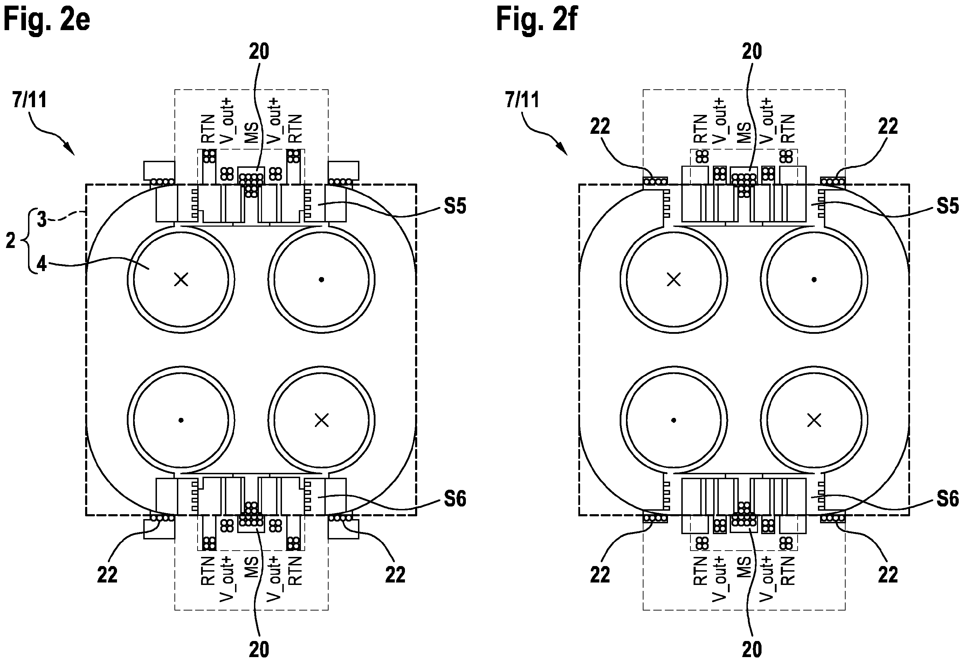

In the transformer 1 of Fig. 2, the layers 7 of Figs. 2a - 2f are stacked corresponding to the first embodiment. In other words, they are arranged such that their arrangement is, along the stacking direction 8: secondary winding layer 11 (Fig. 2e, henceforth: "first layer 2e"), primary winding layer 10 (Fig. 2a, henceforth "second layer 2a"), primary winding layer 10 (Fig. 2c, henceforth "third layer 2c"), primary winding layer 10 (Fig. 2b, henceforth "fourth layer 2b"), primary winding layer 10 (Fig. 2d, henceforth "fifth layer 2d"), secondary winding layer 11 (Fig. 1f, henceforth "sixth layer 2f"). The start point 16 is correspondingly in the second layer 2a, and the end point 17 is correspondingly in the fourth layer 2b, with middle points 18, 19 in the third layer 2c and the fifth layer 2d.

Herein, the first leg portion 4 (top left) has two full turns of primary windings 6 wound around it. The third leg portion 4 (bottom right) also has two full turns of primary windings 6 wound around it. For example for the third leg portion 4, the primary winding portions 12 denoted P7, P8, P9, and P10, interconnected through first interlayer vias 14, form a first full turn. Further, the primary winding portions 12 denoted P23/2, P24, P25, P26 of the fourth layer 2b and the primary winding portion 12 denoted P23/2 of the fifth layer 2d, interconnected through third interlayer vias 24 form a second full turn.

Further, the second leg portion 4 (top right) has no full turns of primary windings 6 wound around it, instead comprising six quarter turns of primary winding portions 12, which however do not supplementary correspond to one another to form full turns. The same holds true for the fourth leg 4 (bottom left).

Herein, all primary winding portions 12 carry current and thus contribute/couple magnetically and electrically. By arranging the primary winding portions 12, particularly P23/2, P24, asymmetrically when considering multiple layers 7, common mode currents are advantageously compensated for while magnetic field distribution properties are further optimized. With regard to the explanations above in view of Figs. 1 and 2, embodiments one and two, it is emphasized that further primary winding portions 12 may suitably be added or removed therein. In particular, especially in free spaces for example at the fourth leg 4 (bottom left) of the second layer 2a in Fig. 2a, further primary winding portions 12 can preferably be added which couple preferably only electrically, i.e. which carry no current. Of course, depending on the number of turns required for the transformer 1, further magnetically coupling primary winding portions 12, i.e. further current carrying primary winding portions 12 and/or turns of primary windings 6 are preferably added.

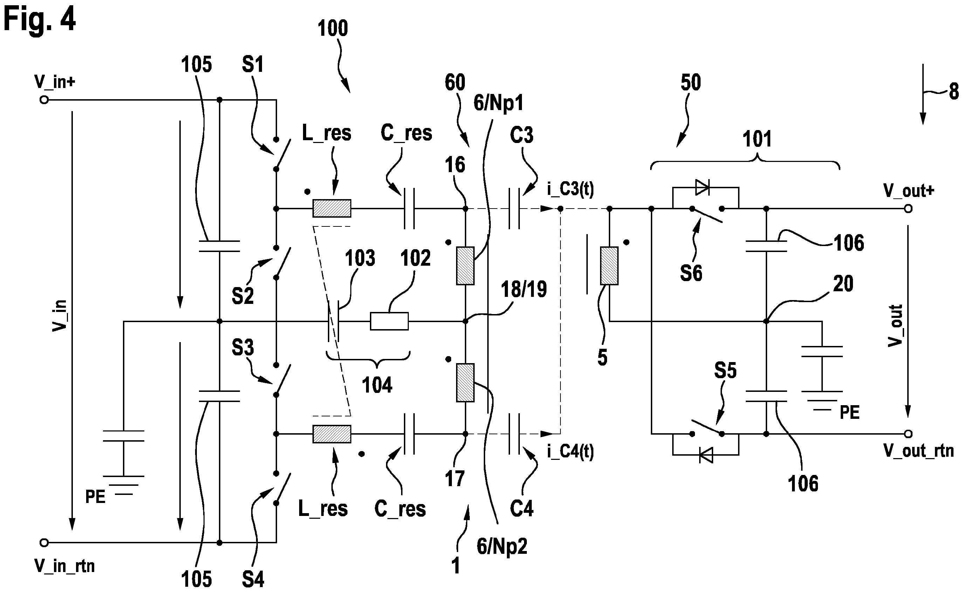

Now, with reference to Figs. 3 and 4, an LLC converter 100 of the present invention will be described. Fig. 3 shows a circuit diagram of a first embodiment of an LLC converter 100 according to the present invention. Fig. 4 shows another circuit diagram of the first embodiment of the LLC converter 100 according to the present invention.

For a precise circuitry configuration of the LLC converter 100, it specifically pointed to Fig. 3, which in detail shows a connection scheme and configuration thereof.

In particular, the LLC converter 100 (henceforth "the converter 100") comprises the planar transformer 1 of embodiments one or two of the planar transformer 1. The primary side 60 of the transformer 1 is connected to an input side of the converter 100, denoted by V_in+ (high side) and V_in_rtn (low side, "rtn" standing for "return"), and switches S1 - S4. Further, on the input side, the converter 100 comprises resonant inductances L_res and resonant capacitors C_res.

Further, in Fig. 3, the start point 16, the end point 17, and the middle points 18, 19 of the transformer 1 are shown.

At the secondary side 50, the converter 100 comprises a voltage doubler 101 before the output, which comprises switches S5 and S6. The output is denoted by V_out+ and V_out_rtn. Further, the middle point 20 of the secondary windings 5 is connected to a middle point of the voltage doubler 101 between output capacitors 106.

The secondary side 50 shown in Fig. 3 corresponds to the secondary layers 11 of Figs. 1e, 1f and Figs. 2e, 2f.

Furthermore, the converter 100 comprises an RC circuit 104 connected to the middle point 18, 19 of the primary windings 6. The RC circuit 104 comprises a resistance element 102 and a capacitor 103, both preferably as discrete elements. The other end of the RC circuit 104 is connected to a stabile potential between input capacitors 105. Thus, the potential across the RC circuit 104 stays stabile.

The RC circuit 104 is configured to dampen or attenuate resonances in the transformer, especially resonances of higher order. Due to the RC circuit 104 being connected directly to the middle point 18, 19 of the primary winding 6, which is held at a substantially stable or quasi-stable potential, the RC circuit 104 is not loaded via the transformer 1 and thus also does not generate any losses of the input voltage. Furthermore, as described above, the compensation of common mode current supplies the stabile or quasi-stabile potential. In this regard, "quasi-stabile" refers to comparatively small resonances generated by the transformer 1 at frequencies much higher than the switching frequencies. These small resonances are dampened by the RC circuit 104 at the primary side 60. The RC circuit 104 thus effectively acts as a high pass filter.

Thus, the RC circuit 104 synergizes together with the common mode current compensation of the transformer 1 so as to further increase the efficiency of the converter 100, especially as opposed to a converter not of the present invention with a transformer not having common mode currents compensated. In such cases, an RC circuit can act as a high pass filter, but further increases losses of such a converter.

Fig. 4 includes, for explanatory purposes, coupling capacities C3, C4 as well as a schematic connection thereof shown in dashed lines. The coupling capacities C3, C4 are lumped coupling capacities between primary side 60 and secondary side 50. The coupling capacities C3, C4 are parasitic, i.e. not discrete elements. For a demonstration of the common mode currents i_C3(t), i_C4(t), the primary side 60 and secondary side 50 are shown shorted.

As can be seen in Fig. 4, and as explained with regard to the embodiments of the transformer 1, the secondary winding 5 will couple electrically weaker with the primary windings 6 between the start point 16 and the middle point 18, 19 than with the primary windings 6 between the middle point 18, 19 and the end point 17. Therefore, by providing the above described electrically coupling primary winding portions 12 generally closer to start 16, the common mode currents i_C3(t) and i_C4(t), which flow in opposing directions and added together result in the total common mode current, can be compensated. This can be derived as follows:

$$ V_{C3} = n * \frac{V_{out}}{2} - \frac{V_{out}}{2} = (n-1) * \frac{V_{out}}{2}, $$

and

$$ V_{C4} = -n * \frac{V_{out}}{2} - \frac{V_{out}}{2} = -(n+1) * \frac{V_{out}}{2} $$

With Vc# being a voltage of coupling capacities C# (C3, C4), $V_{out}$ being the output voltage, and n being the turn ratio between the secondary side winding 5 and the primary winding between start point 16 and the middle point 18, 19 (Np1) or between the middle point 18, 19 and the end point 17 (Np2). As can be taken therefrom, when considering their absolute values, Vca will be larger than $V_{C3}$ for a given n. Thus, the primary windings 6 between start point 16 and middle point 18, 19 couple weaker than those between middle point 18, 19 and end point 17.

As a comparison with Fig. 1 shows, layers 7 provided near the top, i.e. near start 16, have, with regard to the middle point 18, 19 and under consideration of magnetic coupling requirements, more turns of primary winding portions 12 than those near the bottom, i.e. near the end 17. For example, the second layer 1a provided closest to the start 16 has the highest amount of turns of primary winding portions 12 of the two primary layers 10 above the middle point 18, 19, i.e. the second layer 1a and the third layer 1c. Further, the fourth layer 1b has the highest amount of turns of primary winding portions 12 of the two primary layers 10 below the middle point 18, 19, i.e. the fourth layer 1b and the fifth layer 1d. Therefore, the primary winding portions 12 are shifted nearer to the start 16 under consideration of magnetic requirements, i.e. instead of providing the third layer 1c or the fifth layer 1d with the highest numbers of turns of primary winding portions 12.

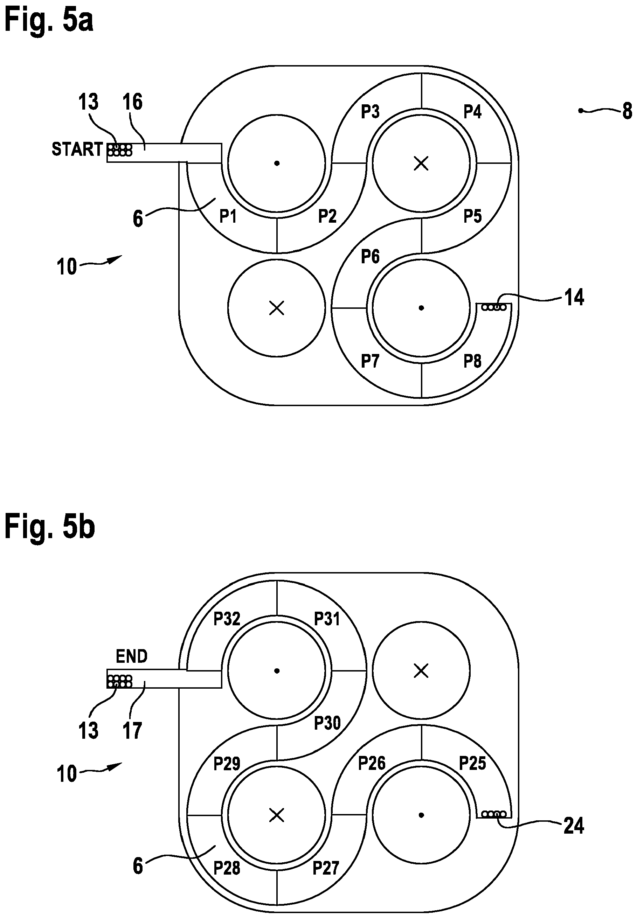

With reference to Figs. 5a - 5d, a third embodiment of a planar transformer 1 is described. Figs. 5a - 5d show schematic cross sectional views of layers 10 of a planar transformer 1 according to a third embodiment of the present invention

Herein, the secondary layers 11 shown in Figs. 1 (1e, 1f) and 2 (2e, 2f) are omitted, but comprise preferably the same structure. In other words, only primary layers 10 are shown herein. In addition, the transformer 1 of the present embodiment comprises the aforementioned magnetic core component 2 comprising at least one plate portion 3 and a plurality of legs 4. In the present embodiment, the magnetic core component 2 comprises four legs 4.

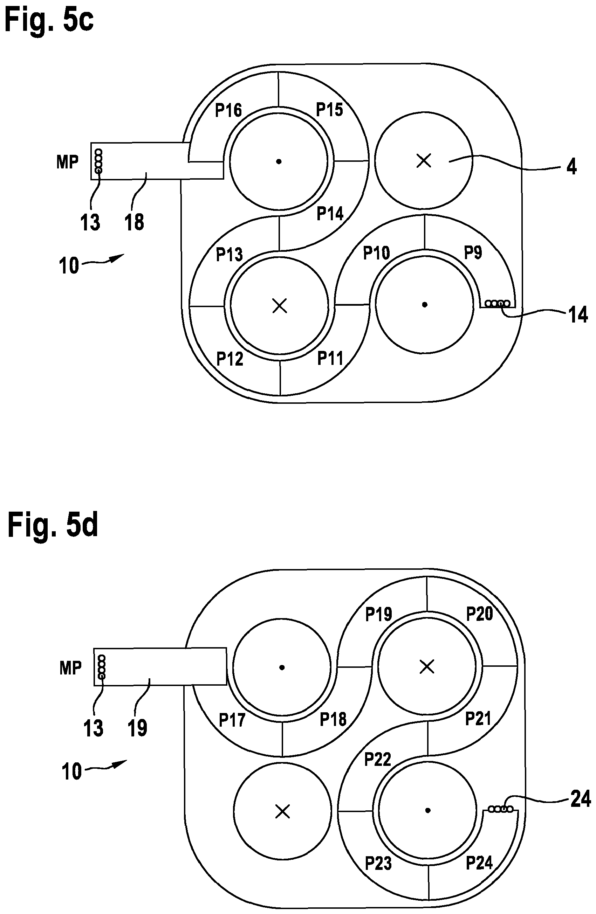

Furthermore, the stacking along the stacking direction 8 of the layers 7 is as follows: secondary winding layer 11 (shown in Fig. 1e for example, henceforth "first layer 1e"), primary winding layer 10 (Fig. 5c, henceforth "second layer 5c"), primary winding layer 10 (Fig. 5a, henceforth "third layer 5a"), primary winding layer 10 (Fig. 5b, henceforth "fourth layer 5b"), primary winding layer 10 (Fig. 5d, henceforth "fifth layer 5d"), secondary winding layer 11 (shown in Fig. 1f for example, henceforth "sixth layer 1f').

As can be taken from Fig. 5, in the present embodiment, the transformer 1 comprises four primary layers 10, each with the same surface area of primary windings 6. As also with embodiments one and two, the primary windings 6 of the primary layers 10 are interconnected between layers through vias 13, 14, and 24.

In the present embodiment, the primary windings 6 are arranged symmetrically with regard to their middle point 18, 19. Herein, the middle point 18, 19 is interconnected using through vias 13 between the second layer 5c and the fifth layer 5d, thus defining a common middle point 18, 19. Each of the first leg 4 (top left) and the third leg 4 (bottom right) comprise, over all primary layers 10, two and a half full turns wound around them.

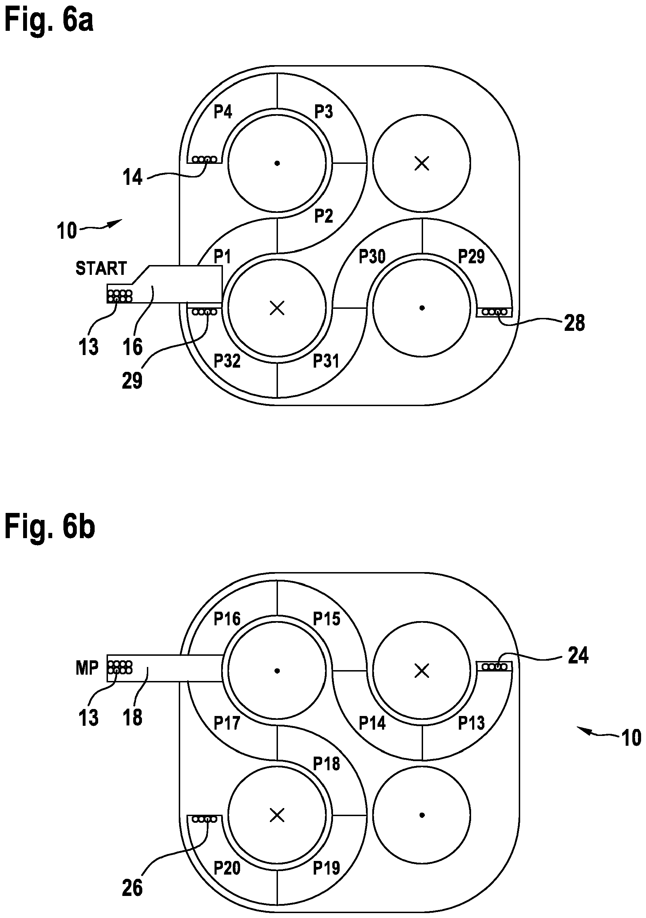

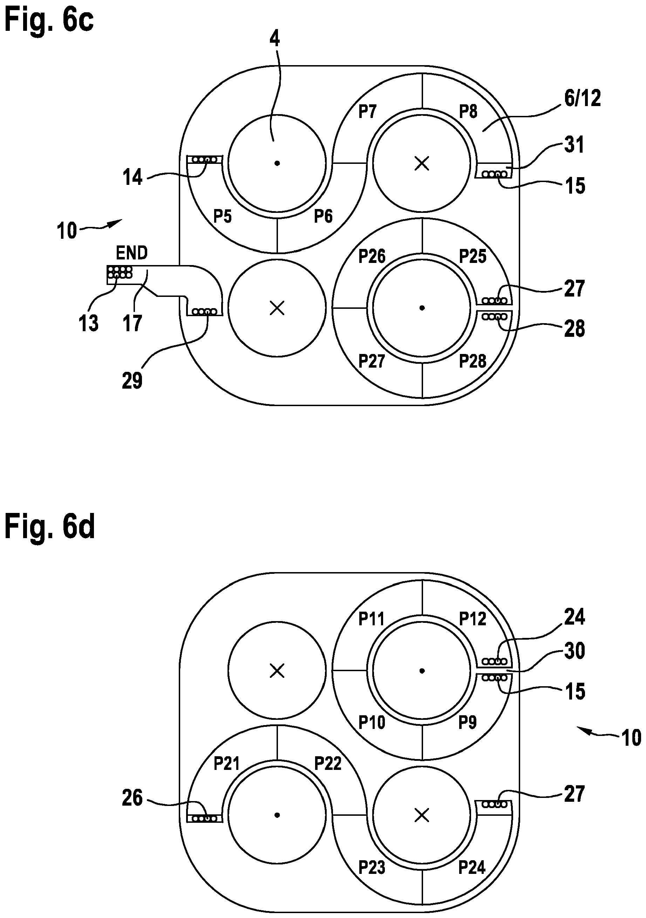

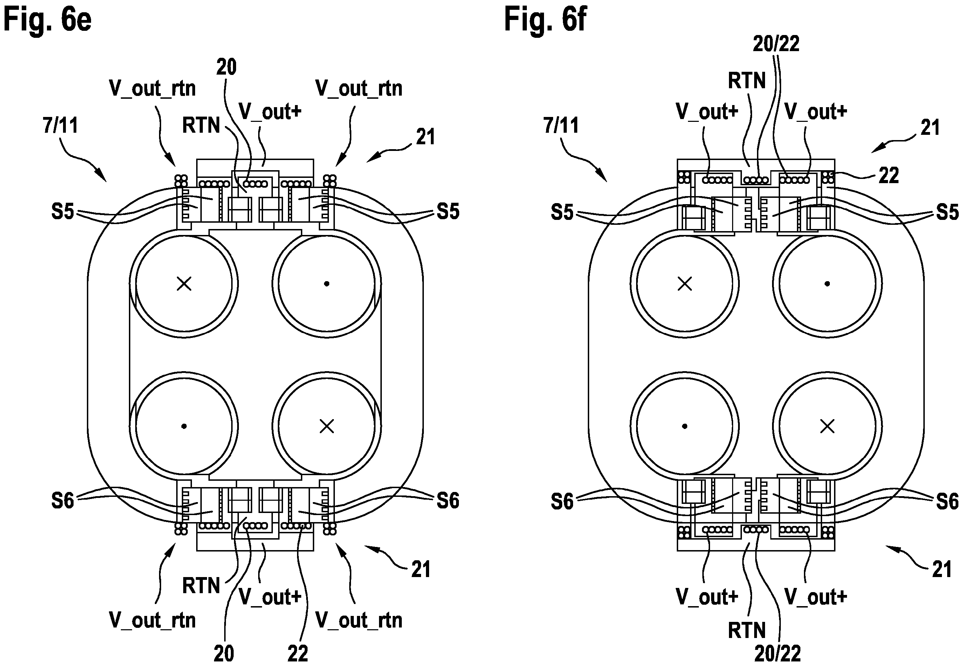

With reference to Fig. 6, a fourth embodiment of a planar transformer 1 is described. Figs. 6a - 6f show schematic cross sectional views of layers 10 of a planar transformer 1 according to a fourth embodiment of the present invention.

The transformer 1 of the present embodiment comprises the aforementioned magnetic core component 2 comprising at least one plate portion 3 and a plurality of legs 4. In the present embodiment, the magnetic core component 2 comprises four legs 4.

Furthermore, the stacking along the stacking direction 8 of the layers 7 is as follows: secondary winding layer 11 (shown in Fig. 6e for example, henceforth "first layer 6e"), primary winding layer 10 (Fig. 6a, henceforth "second layer 6a"), primary winding layer 10 (Fig. 6c, henceforth "third layer 6c"), primary winding layer 10 (Fig. 6d, henceforth "fourth layer 6d"), primary winding layer 10 (Fig. 6b, henceforth "fifth layer 6b"), secondary winding layer 11 (shown in Fig. 6f for example, henceforth "sixth layer 6f").

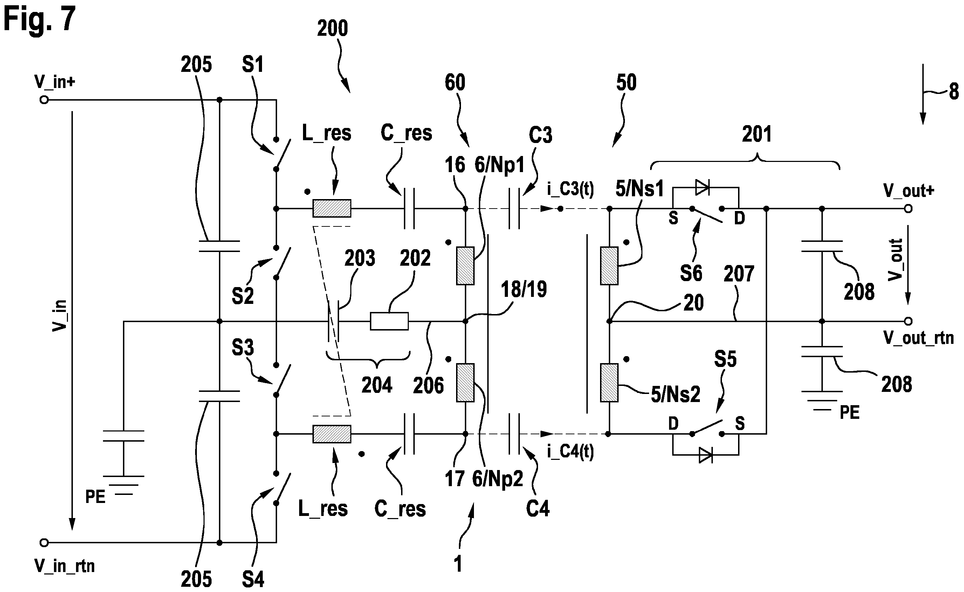

The secondary winding layers 11, especially their connection scheme, is shown in Fig. 7 and will will be explained below with reference thereto.

Herein, the primary windings of the second layer 6a and those of the fifth layer 6b are symmetrical.

The second layer 6a includes the start point 16. Further, the primary layers 10 are interconnected through vias in order: 14, 15, 24, 26, 27, 28, and 29, the latter being connected the end point 17 in the third layer 6c, the primary winding portions 12 being enumerated via their references P1 - P32 in order.

Also in the present embodiment, as with the third embodiment, the transformer 1 comprises four primary layers 10, each with the same surface area of primary windings 6. Each of the primary layers 10 comprises eight quarter turns of primary windings 6.

The first leg 4 (top left) comprises in total two full turns, formed by P3, P4 and P5 and P6 (first full turn), P15, P16 and P17 and P2 (second full turn). The second leg 4 (top right) also comprises in total two full turns, formed by P7, P8 and P13, P14 (first full turn) and P9 - P12 (second full turn). A small gap 30 remaining between P9 and P12 is closed via a tab 31 in the third layer 6c, which is connected to P9 through second interlayer vias 15.

The fifth layer 6b includes the middle point 18 of all primary layers 10.

With reference to Fig. 7, a second embodiment of an LLC converter 200 of the present invention is explained. Fig. 7 shows a circuit diagram of the second embodiment of an LLC converter 200 according to the present invention. Furthermore, as also in Fig. 4, Fig. 7 schematically shows a short circuit between primary side 60 and secondary side 50 for demonstration of common mode current flow.

The LLC converter 200 (henceforth "the converter 200") comprises the planar transformer 1 according to embodiments three or four described above. In other words, the converter 200 comprises the planar transformers 1 with primary layers 10 having the same surface areas of primary windings 6.

Herein, the converter 200 comprises a primary center tap 206 to the middle point 18, 19 of embodiment three or to the middle point 18 of embodiment four. This primary center tap 206 is connected directly to an RC circuit 204, which comprises a resistance element 202 and a capacitor 203 as discrete elements. The primary center tap 206 is connected to a middle point between input capacitors 205. The primary side 60 and the input side of the converter 200 otherwise correspond to the converter 1 of Fig. 3.

Due to the configurations of the planar transformers 1 according to embodiments three or four, a number of primary windings Np1 between start point 16 and the center tap 206, i.e. the middle point 18, 19, is equal to a number of primary windings Np2 between the center tap 206 and the end point 17. The number of primary windings Np1, Np2 correspond to the number of full turns of primary windings 6 on respective sides of the middle point 18, 19.

The secondary side 50 of the present transformer 1 corresponds to the secondary layers 11 shown in Figs. 6e and 6f. As a comparison therewith shows, in the present embodiment, the secondary side 50 also comprises a secondary center tap 207 connected to the middle point 20 of the secondary windings 5. Via their secondary layer interconnection vias 22 (compare Figs. 6e, 6f), the middle point 20 is at equal potential to RTN, i.e. V_out_rtn. The secondary center tap 207 is further connected to a middle point between output capacitors 208. A number of secondary windings Ns1 is equal to Ns2.

The secondary side 50 thus constitutes a push-pull-stage 201 comprising switches S5 and S6. As also with the other embodiments, the switches S5, S6 may each comprise or consist of a plurality of switches in series or in parallel.

On the other hand, the present embodiment preferably alternatively comprises a full wave rectification instead of the push-pull-stage 210.

The symmetric configuration of primary windings 6 shown in Figs. 5 and 6 as well as the symmetric arrangement of the secondary windings 5 leads to a compensation of the common mode current, as i_C3(t) and i_C4(t) are equal, but of opposite polarity. Due to this, the RC circuit 204 also has the advantages described above with respect to the RC circuit 104, especially providing damping with no or very low losses.

Alternatively to the RC circuit 204 being connected on the primary side 60, the RC circuit 204 may be connected to the secondary center tap 207. Further, both the primary side 60 and the secondary side 50 may comprise such an RC circuit 204.

Figs. 8a to 8d show schematic configuration examples of a magnetic core component 2 of the planar transformer 1 according to the present invention. Fig. 8b shows a side view of Fig. 8a, and Fig. 8d shows a side view of Fig. 8c.

In particular, Figs. 8a and 8b show a configuration of the magnetic core component 2 as discussed above with regard to Fig. 1. Figs. 8c and 8d show an alternative configuration of the magnetic core component 2. Therein, as a comparison with Figs. 8a, 8b and for example Figs. 1e and 1f shows, the legs 4 may alternatively be disposed on corners of the plate portion 3.

The configuration of Figs. 8a, 8b has the advantage of covering the windings 5, 6, which provides housing thereof and can capture stray magnetic fields.

The configuration of Figs. 8c, 8d has the advantage of allowing for more efficient cooling of the legs 4 and a more compact size of the magnetic core component 2.

Both aforementioned configurations are preferably combinable with the foregoing described embodiments. In particular, any of the foregoing primary side 60 configurations as well as their respective primary winding layers 10 may preferably be combined with any of the foregoing secondary sides 50 as well as their respective secondary winding layers 11.

Therefore, the present invention provides planar transformers and LLC converters having high efficiency through compensation of common mode currents, while simultaneously providing a compact size.

In addition to the foregoing written explanations, it is explicitly referred to figures 1 to 8, wherein the figures in detail show circuit diagrams and configuration examples of the invention.

**List of Reference Numerals**

| | |
|---|---|
| 1 | planar transformer |
| 2 | magnetic core component |
| 3 | plate portion |
| 4 | leg |
| 5 | secondary winding |
| 6 | primary winding |
| 7 | layer |
| 8 | stacking direction |
| 9 | leg extension direction |
| 10 | primary winding layer |
| 11 | secondary winding layer |
| 12 | primary winding portion |
| 13 | through via |
| 14 | first interlayer via |
| 15 | second interlayer via |
| 16 | primary start point connection strip (start point) |
| 17 | primary end point connection strip (end point) |
| 18 | primary middle point connection strip (middle point) |
| 19 | primary middle point connection strip (middle point) |
| 20 | secondary middle point connection strip (secondary middle point) |

| | |
|---|---|
| 21 | secondary terminal connections |
| 22 | secondary layer interconnection via |
| 23 | width |
| 24 | third interlayer via |
| 25 | heat sink |
| 26 | fourth interlayer via |
| 27 | fifth interlayer via |
| 28 | sixth interlayer via |
| 29 | seventh interlayer via |
| 30 | gap |
| 31 | tab |
| 50 | secondary side |
| 60 | primary side |
| 100 | LLC converter |
| 101 | voltage doubler |
| 102 | resistance element |
| 103 | capacitor |
| 104 | RC circuit |
| 105 | input capacitor |
| 106 | output capacitor |
| S1 - S6 | switch |
| C_res | resonant capacity |
| L_res | resonant inductance |
| C3, C4 | coupling capacitor |
| I_C3(t) | common mode current |
| I_C4(t) | common mode current |
| 200 | LLC converter |
| 201 | push-pull-stage |
| 202 | resistance element |
| 203 | capacitor |
| 204 | RC circuit |
| 205 | input capacitor |
| 206 | primary center tap |
| 207 | secondary center tap |
| 208 | output capacitor |
| Np1 | number of primary windings |
| Np2 | number of primary windings |
| Ns1 | number of secondary windings |
| Ns2 | number of secondary windings |
| P# | primary winding portion reference numeration |

**Claims**

1. Planar transformer (1), especially for a DC/DC converter, comprising:

   • a magnetic core component (2) comprising at least one plate portion (3) and a plurality of legs (4) extending from the plate portion (3);
   • a secondary transformer side (50) with at least one secondary winding (5); and
   • a primary transformer side (60) with a plurality of primary windings (6); wherein
   • the at least one secondary winding (5) and the plurality of primary windings (6) are stacked in layers (7) along a stacking direction (8) parallel to an extension direction (9) of the legs (4),

- the plurality of primary windings (6) of different layers (7) are connected to one another, and
- wherein a total surface area of primary windings (6) differs between at least two layers (7) of primary windings (6).

2. Planar transformer (1) according to claim 1, wherein a number of turns of a layer (7) is defined as the total number of turns of a winding (5, 6) around all legs (4) in this layer (7), wherein the number of turns per layer (7) of primary windings (6) differs between at least two layers (7) of primary windings (6).

3. Planar transformer (1) according to claim 2, wherein the total number of turns of a layer (7) of at least two layers (7) of primary windings (6) is respectively a non-integer rational number.

4. Planar transformer (1) according to claim 3, wherein the total number of turns of a layer (7) of multiple layers (7) added together is an integer.

5. Planar transformer (1) according to any one of the foregoing claims, wherein at least one layer (7) of primary windings (6) comprises at least one primary winding portion (12) which is connected to further primary winding portions (12) of the same layer (7) only indirectly, especially only via at least one primary winding portion (12) of another layer (7), and/or at least one primary winding portion (12) which couples only electrically, especially so as to produce a capacity, between the primary side (60) and the secondary side (50).

6. Planar transformer (1) according to claim 5, wherein at least one of the primary winding portions (12) is less than a full turn.

7. Planar transformer (1) according to claim 5 or claim 6, wherein the at least one only electrically coupling primary winding portion (12) does not carry a current when the primary transformer side (60) is connected to a voltage.

8. Planar transformer (1) according to any one of claims 2 to 7, wherein a total number of turns of primary windings (6) of all layers (7) around a first leg (4) is different from a total number of turns of primary windings (6) of all layers (7) around a second leg (4).

9. Planar transformer (1) according to any one of the foregoing claims, wherein, in at least one layer (7), at least one leg (4) comprises no primary winding (6) wound around it.

10. Planar transformer (1) according to any one of the foregoing claims, wherein the primary windings (6) are elongated meander-shaped and/or wherein the secondary windings (5) are plate-shaped.

11. Planar transformer (1) according to any one of the foregoing claims, comprising two layers (7) of secondary windings (5) connected with one another and sandwiching at least two layers (7) of primary windings (6) connected with one another.

12. Planar transformer (1) according to claim 11, wherein the respectively connected windings are connected with one another through vias (13, 14, 15, 24, 26 - 29) extending in stacking direction (8) between the layers (7).

13. Planar transformer (1) according to any one of the foregoing claims, wherein a magnetic flux direction parallel to the extension direction (9) of the legs (4) in one leg (4) is the same for all layers (7) of primary windings (6).

14. LLC converter (100), comprising the planar transformer (1) according to any one of the foregoing claims, and especially further comprising a resistance element (102) and a capacitance element (103), especially together as an RC circuit (104), connected directly to a middle point (18, 19) of the primary winding (6) of the planar transformer (1).

15. LLC converter (200), comprising:

- a planar transformer (1) comprising:

    ∘ a magnetic core component (2) comprising at least one plate portion (3) and a plurality of legs (4) extending from the plate portion (3);
    ∘ a secondary transformer side (50) with a plurality of secondary windings (5); and
    ∘ a primary transformer side (60) with a plurality of primary windings (6); wherein
    ∘ the at least one secondary winding (5) and the plurality of primary windings (6) are stacked in layers (7) along a stacking direction (8) parallel to an extension direction (9) of the legs (4),
    ∘ the plurality of primary windings (6) of different layers (7) are connected to one another;

- wherein the primary transformer side (60) is connected with an input of the LLC converter (200) and comprises a center tap (206) of the primary windings (6),
- wherein the secondary transformer side (50) is connected with an output of the LLC converter (200) and comprises a center tap (207) of the secondary windings (5), and
- wherein the primary and/or secondary center

13

taps (206, 207) are directly connected to an RC circuit (204).

# Fig. 1a

# Fig. 1b

EP 4 503 072 A1

## Fig. 1c

## Fig. 1d

# Fig. 1e

# Fig. 1f

EP 4 503 072 A1

## Fig. 2a

## Fig. 2b

# Fig. 2c

P16    P15

P14

P13    P10    P9

P12    P11

13  18

MP

4

7/10

14

# Fig. 2d

P19    P20

P17    P18    P21

P22

P23/2

13  19

MP

7/10

24

**Fig. 2f**

**Fig. 2e**

# Fig. 3

EP 4 503 072 A1

**Fig. 4**

EP 4 503 072 A1

## Fig. 5a

## Fig. 5b

**Fig. 5c**

**Fig. 5d**

## Fig. 6a

## Fig. 6b

# Fig. 6c

# Fig. 6d

Fig. 6f

20/22

RTN

V_out+

V_out+

22

21

S5

S6

21

V_out+

RTN

20/22

7/11

S5

S6

Fig. 6e

V_out_rtn

V_out+

RTN

V_out_rtn

20

22

21

S5

S6

21

V_out_rtn

V_out+

RTN

V_out_rtn

20

7/11

S5

S6

Fig. 7

EP 4 503 072 A1

**Fig. 8a**

3

2

8/9

4

**Fig. 8b**

8/9

4

3

**Fig. 8c**

3

2

8/9

4

**Fig. 8d**

8/9

4

3

EP 4 503 072 A1

Europäisches
Patentamt

European
Patent Office

Office européen
des brevets

# EUROPEAN SEARCH REPORT

Application Number

EP 23 18 9245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/125248 A1 (MATSUURA KEN [JP]) 27 April 2023 (2023-04-27) | 1-6,8-14 | INV. H01F27/34 |
| Y | * 60, 61, 85, 88-90, 127-138; figures 8, 9, 16-18 * | 15 | H02M3/00 H02M3/335 H01F27/28 |
| X | US 2023/094775 A1 (LAI YEN-SHIN [TW] ET AL) 30 March 2023 (2023-03-30) | 1-4, 10-14 | |
| Y | * 39, 46 and 53-58; figures 1, 2B, 4A, 5A, 7, 10 * | 15 | |
| X | CN 114 005 653 A (HUAWEI TECH CO LTD) 1 February 2022 (2022-02-01) | 1-3, 10-14 | |
| Y | * 68-71 and 93-96; figures 2, 4, 9a, 9b, 10a, 10b * | 15 | |
| X | JP 7 191256 B1 (MITSUBISHI ELECTRIC CORP) 16 December 2022 (2022-12-16) | 1-4,8-14 | |
| Y | * 16, 21-26, 33, 42 and 46-50; figures 1, 3, 4, 5, 18, 20 * | 15 | |
| X | CN 114 068 158 A (HUAWEI TECH CO LTD) 18 February 2022 (2022-02-18) | 1-14 | TECHNICAL FIELDS SEARCHED (IPC) |
| Y | * 72-80 and 85; figures 5, 6, 12, 17, 18 * | 15 | H01F H02M |
| X | CN 109 524 209 A (UNION BROTHER MACHINERY CO LTD) 26 March 2019 (2019-03-26) | 1-4,8,9, 11-14 | |
| Y | * 35-39; figures 3, 8 * | 15 | |
| Y | US 2022/278622 A1 (NISHIMOTO TAIKI [JP] ET AL) 1 September 2022 (2022-09-01) * 64-78; figure 7 * | 15 | |

The present search report has been drawn up for all claims

| Place of search | Date of completion of the search | Examiner |
|---|---|---|
| Munich | 16 January 2024 | Brächer, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 503 072 A1**

## ANNEX TO THE EUROPEAN SEARCH REPORT
## ON EUROPEAN PATENT APPLICATION NO.

EP 23 18 9245

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2024

| Patent document cited in search report | | | Publication date | Patent family member(s) | | | Publication date |
|---|---|---|---|---|---|---|---|
| US 2023125248 | A1 | | 27-04-2023 | CN | 115335930 | A | 11-11-2022 |
| | | | | JP | 7283425 | B2 | 30-05-2023 |
| | | | | JP | 2021153091 | A | 30-09-2021 |
| | | | | US | 2023125248 | A1 | 27-04-2023 |
| | | | | WO | 2021192609 | A1 | 30-09-2021 |
| US 2023094775 | A1 | | 30-03-2023 | CN | 115863016 | A | 28-03-2023 |
| | | | | TW | 202314746 | A | 01-04-2023 |
| | | | | US | 2023094775 | A1 | 30-03-2023 |
| CN 114005653 | A | | 01-02-2022 | NONE | | | |
| JP 7191256 | B1 | | 16-12-2022 | CN | 116525269 | A | 01-08-2023 |
| | | | | JP | 7191256 | B1 | 16-12-2022 |
| | | | | JP | 2023110988 | A | 10-08-2023 |
| | | | | US | 2023245816 | A1 | 03-08-2023 |
| CN 114068158 | A | | 18-02-2022 | NONE | | | |
| CN 109524209 | A | | 26-03-2019 | NONE | | | |
| US 2022278622 | A1 | | 01-09-2022 | CN | 114208009 | A | 18-03-2022 |
| | | | | JP | WO2021024879 | A1 | 11-02-2021 |
| | | | | US | 2022278622 | A1 | 01-09-2022 |
| | | | | WO | 2021024879 | A1 | 11-02-2021 |

For more details about this annex : see Official Journal of the European Patent Office, No. 12/82

## REFERENCES CITED IN THE DESCRIPTION

**Patent documents cited in the description**

- EP 3696831 A1
- CN 211719418 U